Europäisches Patentamt

European Patent Office

Office européen des brevets

(11) Publication number: **0 234 699**
**A1**

## (12) EUROPEAN PATENT APPLICATION

(21) Application number: **87300330.5**

(22) Date of filing: **15.01.87**

(51) Int. Cl.⁴: **B60R 11/02**

(30) Priority: **15.01.86 GB 8600915**
**05.09.86 GB 8621409**

(43) Date of publication of application:
**02.09.87 Bulletin  87/36**

(84) Designated Contracting States:
**CH DE ES FR GB IT LI**

(71) Applicant: **Transport Media (Great Britain)**
**Limited**
**20 Soho Square**
**London W1(GB)**

(72) Inventor: **Jacobs, Michael**
**Curlew Cottage 80 Blackwell**
**Darlington Co. Durham DL3 8QW(GB)**

(74) Representative: **Tubby, David George et al**
**MARKS & CLERK 57-60 Lincoln's Inn Fields**
**London WC2A 3LS(GB)**

(54) **Improvements in and relating to televisions in motor vehicles.**

(57) A taxicab has a television viewer whereby the passenger may be regaled with advertisements. The viewer is preferably mounted in the lower portion of the cab. Where the cab is provided with a partion between passenger and driver areas, the viewer is mounted in that partition.

F I G 1.

EP 0 234 699 A1

# IMPROVEMENTS IN AND RELATING TO TELEVISIONS IN MOTOR VEHICLES

The present invention relates to various means associated with the installation of television monitors in taxicabs, other motor vehicles and other similar forms of vehicular transport.

In taxicabs and often in chauffeured vehicles, there is provided a partition separating the front portion of the vehicle (reserved for the driver) from the rear portion (reserved for the passengers). Such a partition normally comprises an upper portion which is generally transparent and normally provides means for communication between the passenger and the driver (e.g. sliding transparent panels) and a lower portion whose function is mainly supportive and which is often used to accommodate such items as heaters, cigar lighters and cocktail cabinets, the two latter being less common in taxicab than in chauffeured cars.

In British Patent Publication No. 2,144,682, there is disclosed the use of the upper part of this partition, and specifically the bulkhead between the transparent portion and the ceiling, to accommodate a television monitor, whereby the passenger may be entertained or informed during his journey.

Often, however, it may be convenient to mount the television monitor somewhat below the ceiling level and, in such a case, the monitor may be mounted in the partition below the transparent, communicating portion of the partition.

Accordingly, in one aspect of the invention there is provided a transport vehicle having a section for a driver and a section for passengers, said sections being separated by a partition having an upper transparent or translucent portion and a lower portion, wherein there is mounted in said lower portion a television monitor.

There may also be included equipment for receiving a signal to enable the television monitor to generate a picture or there may be included equipment generating such a signal, e.g. a video tape or video disc player, operatively connected to said television monitor.

In another embodiment of the invention, there is provided a bracket for mounting a television monitor within such a partition and, in its broadest aspect, the present invention provides a bracket adapated to support a television monitor and adapted to fix on or into such a partition.

In a preferred embodiment, the bracket of the invention comprises a supporting base for supporting the television monitor and a pair of upright members for restraining the sides of the television monitor. The bracket also preferably comprises a flange mounted below, and preferably attached to, said base, said flange being of generally "L"-shaped cross-section. The flange is preferably attached to members for connecting the bracket to said partition.

In a particularly preferred embodiment, each of said upright members is attached to a portion of said base, said member and the attached portion together forming a flange of generally "L"-shaped cross-section.

In a still further embodiment of the invention there is provided a passenger motor vehicle, e.g. a taxicab, having a seating area for a driver and a seating area for one or more passengers, wherein there is provided a television monitor screen located so as to be visible by a passenger seated in said passenger seating area (preferably attached to or adjacent the roof of the vehicle), said television monitor screen being operatively connected to a video player.

The video player in all of the above embodiments of the invention is preferably powered by the vehicle battery (i.e. the battery powering the sandard electrical systems of the vehicle and the starter motor thereof).

It is preferred that the system of tv monitor and video player is operatively connected to the ignition of the motor vehicle via a logic device, such that the system is switched either on or into a "standby" mode either upon switching on the ignition or after a predetermined interval (e.g. 1 to 3, preferably 2, minutes) thereafter. In particular, it is preferred that, upon switching on the ignition, the system is actuated and placed in a stand-by mode ready to be switched on as described below.

Of course, many taxis spend a significant portion of their time cruising, i.e. looking for fares. It would not be desirable that the system should be switched on when the taxi or other vehicle is moving and hence has no passengers. It is possible to provide a switch so that the passenger himself may switch on the system, but this is not preferred as some passengers may fail to appreciate the enjoyment to be derived from the system and may never switch it on.

A better system is such that the system is switched on automatically at the beginning of each passenger journey. This may be achieved in several ways:

1. The taxi or other vehicle driver may be provided with a switch to switch the system on. This has the advantage that it takes the control away from the passenger but has the disadvantages that the driver may forget or it may delay his moving off, with attendant delays possible for other traffic.

2. A pressure-sensitive switch operatively connected to the sysem may be provided in the or each passenger seat such that the system switches on when a passenger sits down and off when the passenger rises. This is a better system but still has several disadvantages, e.g. a lightweight passenger may fail to actuate it or a bumpy ride, causing the passenger to move up and down may switch the system off and on unpredictably.

3. The preferred arrangement, where the vehicle is provided with either a meter ( to measure the length and/or duration of the journey, and hence the fare) or a device to indicate the vehicle is occupied or both is to connect the system to said meter or device such that, upon actuation of said meter or device, the system itself is also actuated.

If desired, a switch accessible to the passenger may be provided, so that the passenger may switch off the system. This is not necessarily preferred, but may be required by some licensing authorities.

The invention is further illustrated by the accompanying drawings, in which:

Figure 1 shows the components of the present invention, partially exploded; and

Figure 2 shows, in part, a modification of the system of Figure 1, where the system is actuated by operation of the "Hire" light.

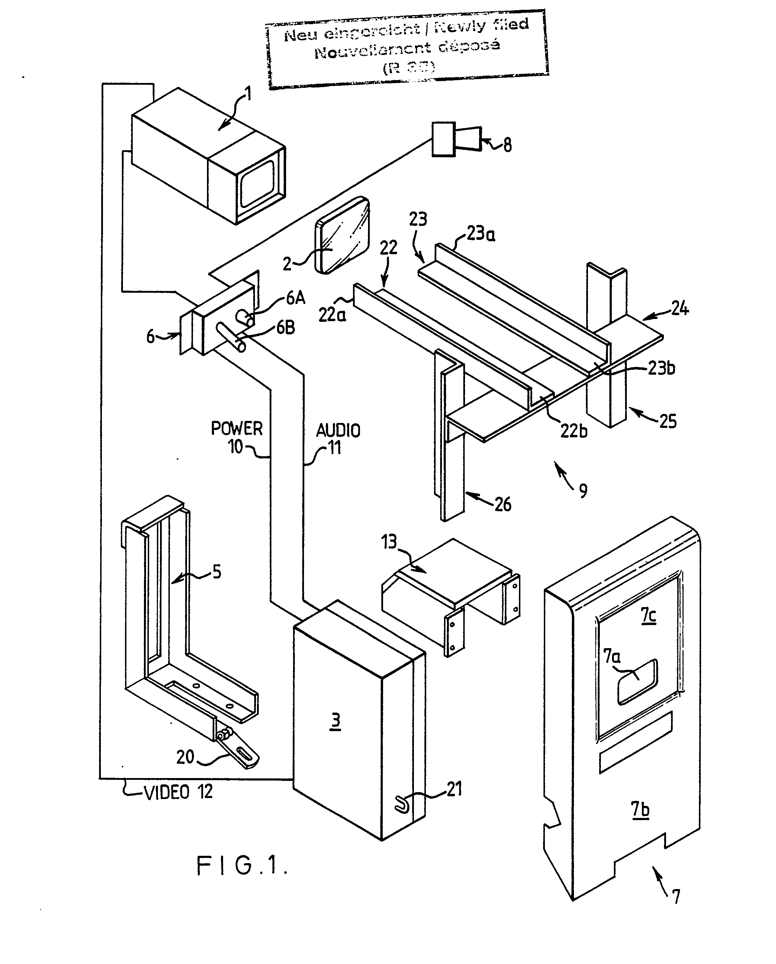

The equipment shown in Figure 1 comprises a television monitor 1, which may incorporate a television receiver, if desired. Optionally, there is provided in front of the screen of the television monitor a lens 2 to magnify the visual output. Howver, this may not always be required.

We prefer to include a video player, which may be a video tape player or a video disc player, or any other form of apparatus for generating a signal capable of convertion to a video output, player 3. Such a player 3 is capable of generating at least a signal convertible by the television monitor to a television picture and may also be capable of generating an audio signal. The player 3 is preferably mounted within the boot or other convenient part of the vehicle. Preferably the player is supported within a metal restraint or safety device 5, to which it may be secured by means of latch parts 20 and 21 and a padlock (not shown). The player 3 generates a video signal, fed to the monitor 1 by line means 12. It also generates an audio signal fed by line 11 to a speaker 8 via a logic device 6 incorporating a switch and/or volume control 6A. Power is fed to the player 3 along line 10, optionally controlled by a switch 6B within said logic device 6. The audio signal is fed to a speaker or speakers 8 (only one shown).

In accordance with the present invention, in operation, the television monitor 1 rests upon a bracket shown generally as 9, which supports the monitor within an aperture in the aforementioned partition. The bracket 9 comprises a pair of generally "L"-shaped flanges 22 and 23, each having an upright portion 22a and 23a for restraining the sides of the television monitor 1 and a base portion 22b and 23b on which the television monitor 1 rests.

The flanges 22 and 23 are attached to a flange 24, again of generally "L"-shaped cross-section. The attachment may be by any convenient means, e.g. nailing screwing, bolting, rivetting, welding, glueing or any other means. Attached to the flange 24 are a pair of supports 25 and 26, of any suitable design, but again shown as flanges of generally "L"-shaped cross-section for attaching the bracket to a partition within said vehicle.

The material of which the various parts, 22, 23, 24, 25 and 26, of the bracket 9 is made is not critical to the present invention. Suitable materials include metal, plastics materials and wood, but metal is generally preferred.

The standard design of taxicab often referred to as a "London Taxicab" or "Hackney carriage" generally incorporates a heater, e.g. hot air supply, (not shown) towards the bottom centre of the partition. The television monitor in accordance with the present invention is preferably mounted centrally of the partition and hence necessarily will be mounted above the heater. Such a position renders the monitor liable to damage as a result of excess heat. It is an advantage of the present invention that the flange 24 may act as a heat shield and/or baffle to direct the flow of hot air away from the television monitor and thus provide some degree of protection to the monitor. If desired, this protection may be increased by incorporating into or onto flange 24 heat insulating materials, e.g. plastics foam, wood, reflective materials etc.

A cover 13 is provided to cover the rear of the television monitor, which will normally protrude into the driver's section of the vehicle. This prevents the driver from accidentally damaging the monitor. If desired, this cover 13 may be padded.

We prefer to mount a panel 7 over the television monitor and, for aesthetic appeal, over the central portion of the lower part of the partition. The panel includes an aperture 7a through which the screen of the monitor is visible. The precise shape of the panel will vary depending upon the design of the taxicab. The panel may be made of wood of any other substance which is capable of providing an essentially rigid structure, for example metal or certain plastics materials, but it is preferably of wood.

If desired a further aperture 7b may be provided in the panel 7 through which the output of a heater (not shown) may be directed at a passenger. Also, if desired or required, another portion 7c of the panel 7 may be used to mount a table of fares or other interesting or informative information.

The operation of the logic device 6, video player 3 and monitor 1 are as described in British Patent Specification No. 2,144,682A, from which full details of the operation may be obtained.

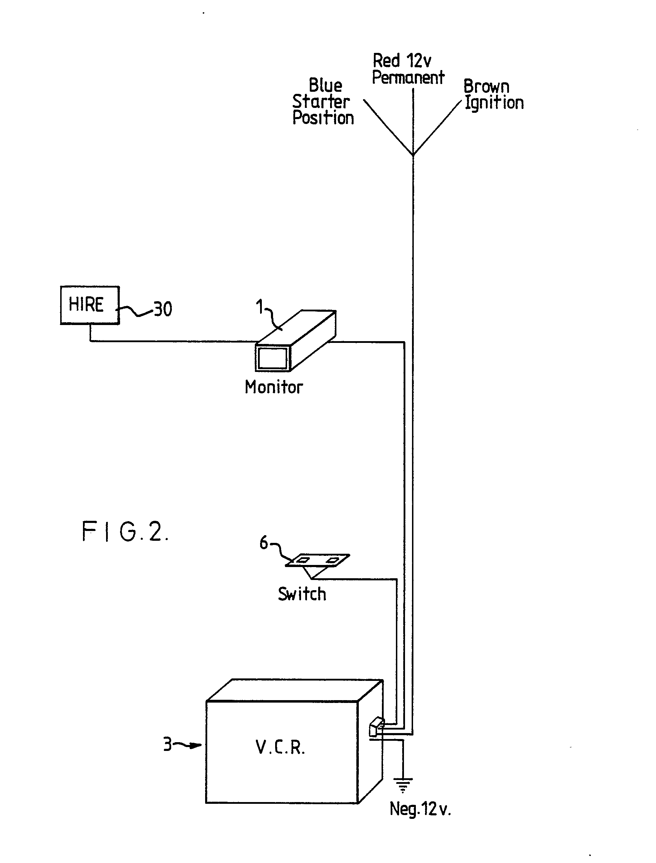

Figure 2 shows, in part, an alternative and preferred arrangement where the system is operatively conencted to the "hire" light 30 of a taxicab, such that, when the light is on (to indicate that the cab is available for hire) the system (specifically the monitor 1 and video player 3) is off, whereas, when the light is off (to indicate that the cab is unavailable) the system is on. In this case it may be desirable to provide a switch or other device actuated by the driver, so that the system may be independently switched off when the driver goes off duty.

Alternatively, if the arrangement is such that the "hire" light is on when the cab is occupied but off when the cab is available for hire, switching on the hire light will switch on the monitor and video player, whilst switching off the light will switch off the monitor and video player.

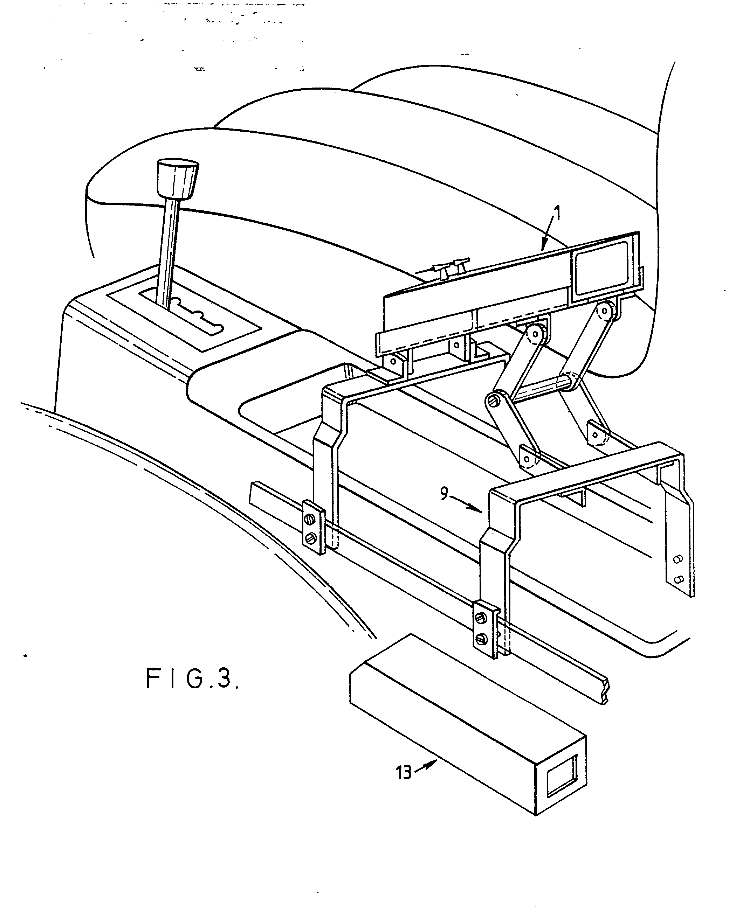

Alternatively, the support may be as in Fig. 3, although variations are possible, e.g. it could have only one upright, inverted-U support.

## Claims

1. A taxicab, having a seating area for a driver and a seating area for one or more passengers, wherein there is provided a television monitor screen located so as to be visible by a passenger seated in said passenger seating area, said television monitor screen being operatively connected to a video player.

2. A taxicab as claimed in claim 1, wherein said monitor is attached to or adjacent the roof of the vehicle.

3. A taxicab as claimed in claim 1, wherein said monitor is attached to or adjacent the well between front seats in said vehicle.

4. A taxicab as claimed in claim 1, wherein said vehicle has a partition between the driver seating area and the passenger seating area and the monitor is mounted in the lower portion of said partition.

5. A taxicab as claimed in claim 1, wherein said areas are separated by a partition having an upper transparent or translucent portion and a lower portion, said television monitor being mounted in said lower portion.

6. A taxicab as claimed in claim 5, wherein there is provided a bracket for mounting said television monitor within said partition.

7. A taxicab as claimed in claim 6, wherein said bracket comprises a supporting base for supporting the television monitor and a pair of upright members for restraining the sides of the television monitor.

8. A taxicab as claimed in claim 7, wherein said bracket also comprises a flange mounted below, and preferably attached to, said base, said flange being of generally "L"-shaped cross-section.

9. A taxicab as claimed in claim 8, wherein said flange is attached to, said base.

10. A taxicab as claimed in claim 8 or claim 9, wherein said flange is attached to members for connecting the bracket to said partition.

11. A taxicab as claimed in any one of claims 7 to 10, wherein each of said upright members is attached to a portion of said base, said member and the attached portion together forming a flange of generally "L"-shaped cross-section.

12. A taxicab as claimed in any one of the preceding claims, wherein the video player is powered by the vehicle battery.

13. A taxicab as claimed in any one of the preceding claims, wherein the system of tv monitor and video player is operatively connected to the ignition of the motor vehicle via a logic device, such that the system is switched either on or into a "stand-by" mode either upon switching on the ignition or after a predetermined interval.

14. A taxicab as claimed in claim 13, wherein said interval is from 1 to 3 minutes.

15. A taxicab as claimed in claim 14, wherein said interval is about 2 minutes.

16. A taxicab as claimed in any one of claims 13 to 15, wherein, upon switching on the ignition, the system is actuated and placed in a stand-by mode ready to be switched on.

17. A taxicab as claimed in claim 16, wherein the vehicle is provided with a switch to switch the system on.

18. A taxicab as claimed in claim 16, wherein a pressure-sensitive switch operatively connected to the system is provided in the or each passenger seat such that the system switches on when a passenger sits down and off when the passenger rises.

19. A taxicab as claimed in claim 16, wherein the vehicle is provided with either a meter (to measure the length and/or duration of the journey, and hence the fare) or a device to indicate the vehicle is occupied or both and the system is connected to said meter or device such that, upon actuation of said meter or device, the system itself is also actuated.

F I G .1.

FIG.2.

F I G.3.

## European Patent Office

**EUROPEAN SEARCH REPORT**

Application number

EP 87 30 0330

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| D,X | GB-A-2 144 682 (JACOBS)<br>* The whole document * | 1,2 | B 60 R 11/02 |
| D,Y | | 3-6 | |
| D,A | | 12,13,<br>16,17 | |
| | --- | | |
| Y | DE-A-2 536 854 (STEAG AG)<br>* Page 3, line 13 - page 5, line 25; figure 1 * | 3-6 | |
| A | | 16,17 | |
| | --- | | |
| . A | US-A-3 827 772 (JOHNSON)<br>* The whole document * | 7-11 | TECHNICAL FIELDS SEARCHED (Int. Cl.4) |
| | --- | | B 60 R |
| A | US-A-3 685 708 (HERRINGTON)<br>* The whole document * | 7-11 | |
| | ----- | | |

The present search report has been drawn up for all claims

| Place of search | Date of completion of the search | Examiner |
|---|---|---|
| THE HAGUE | 22-05-1987 | MAUSSER,T. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82